(19)

Europäisches
Patentamt
European
Patent Office
Office européen
des brevets

(11) **EP 1 630 949 B1**

(12) **EUROPEAN PATENT SPECIFICATION**

(45) Date of publication and mention
of the grant of the patent:
**08.10.2008 Bulletin 2008/41**

(51) Int Cl.:
**H02P 21/00** *(2006.01)*   **H02P 21/14** *(2006.01)*

(21) Application number: **05107533.1**

(22) Date of filing: **16.08.2005**

(54) **Position-sensorless control circuit**

Schaltung zur sensorlosen Positionsregelung

Circuit pour la commande de position sans capteur

(84) Designated Contracting States:
**DE ES FR GB IT**

(30) Priority: **25.08.2004 JP 2004244822**

(43) Date of publication of application:
**01.03.2006 Bulletin 2006/09**

(73) Proprietor: **SANYO ELECTRIC CO., LTD.**
**Moriguchi City, Osaka 570-8677 (JP)**

(72) Inventor: **Tomigashi, Yoshio**
**Osaka (JP)**

(74) Representative: **Walaski, Jan Filip et al**
**Venner Shipley LLP**
**20 Little Britain**
**London EC1A 7DH (GB)**

(56) References cited:
**WO-A-20/04021557**

- **MORIMOTO, S.; KAWAMOTO, K.; SANADA, M.; TAKEDA, Y.: "Sensorless control strategy for salient-pole PMSM based on extended EMF in rotating reference frame" IEEE TRANSACTIONS ON INDUSTRY APPLICATIONS, vol. 38, July 2002 (2002-07), pages 1054-1061, XP002360333**

EP 1 630 949 B1

Printed by Jouve, 75001 PARIS (FR)

**Description**

**BACKGROUND OF THE INVENTION**

1. Field of the Invention

The present invention relates to a position-sensorless control circuit for controlling the driving of a motor without the use of a rotor position sensor. The present invention also relates to a motor driving system incorporating such a position-sensorless control circuit.

2. Description of Related Art

Two typical methods for driving a synchronous motor that uses a permanent magnet as a field magnet are: a method relying on synchronous operation that achieves driving through an open loop without detecting a rotational position as in controlling an induction motor with an inverter; and a method relying on brushless DC motor operation that achieves driving through a closed loop by the use of some means for detecting a rotational position.

The latter method, that is, the one relying on brushless DC motor operation, requires the provision of some rotor position sensor, and thus requires an extra number of wiring leads between an inverter and a motor as compared with when an induction motor is driven with an inverter. This lowers maintainability and reliability, and limits the application of such a method, making it practically impossible to use it, in particular, in a special environment as in a compressor. To overcome this shortcoming, techniques for inferring a rotational position without using a sensor have been proposed.

For example, according to the technique proposed in Japanese Patent Registered No. 3411878 (hereinafter referred to as Patent Publication 1), in the dc-qc rotational coordinate system inferred for the purpose of control, the dc-axis and qc-axis components of the voltage applied to the motor are calculated, and, by the use of both of those dc-axis and qc-axis components, the axis deviation angle is determined.

On the other hand, according to the technique proposed in Japanese Patent Application Laid-open No. 2003-259679 (hereinafter referred to as Patent Publication 2), an inferred value of the d-axis induction voltage (electromotive force) is calculated, and control is performed such that the inferred value of the d-axis induction voltage converges at zero.

The technique proposed in Patent Publication 1 mentioned above has the following disadvantages. Calculating both the dc-axis and qc-axis components of the voltage applied to the motor requires a large amount of calculation, resulting in a heavy calculation load. The larger the amount of calculation, the higher the speed required for calculation, increasing the electric power consumption by and the cost of a device adopting the technique.

The technique proposed in Patent Publication 2 mentioned above has the following disadvantages. This technique relies on the fact that, as the axis deviation angle approaches zero, the inferred value of the d-axis induction voltage also approaches zero. The relationship between the axis deviation angle and the inferred value of the d-axis induction voltage, however, varies with the rotation speed of the motor. This makes the technique unsuitable to achieve stable control.

The IEEE paper "Sensorless control strategy for salient-pole PMSM based on extended EMF in rotating reference frame" achieves a stable control, but requires an extended EMF estimation by least-order observer implemented on a DSP.

**SUMMARY OF THE INVENTION**

An object of the present invention is to provide a position-sensorless control circuit that achieves stable position-sensorless control of a motor with a slight amount of calculation, and to provide a motor driving system incorporating such a position-sensorless control circuit.

This object is solved by the features of claim 1.

The dependent claims recite advantageous embodiments of the invention.

With this configuration, to reduce the axis deviation angle, it is necessary only to infer the δ-axis magnetic flux. This requires a very small amount of calculation (as compared with, for example, what is disclosed in Patent Publication 1 mentioned earlier). Moreover, since the δ-axis magnetic flux does not depend on the rotation speed of the motor, it is possible to achieve stable position-sensorless control (control whereby the axis deviation angle is reduced, or the axis deviation angle is made to converge at zero).

What is referred to as the δ-axis magnetic flux above includes what can be regarded, through approximation, as, "of the magnetic flux produced by the permanent magnet, the component parallel to the δ-axis".

Accordingly, for example, the δ-axis magnetic flux inferrer may infer the δ-axis magnetic flux by finding the δ-axis component of the sum of the magnetic flux produced by the permanent magnet and the magnetic flux produced by the d-axis component of the motor current.

Usually, the magnetic flux produced by the permanent magnet is far larger than the magnetic flux produced by the d-axis component of the motor current. When this is the case, the δ-axis component of the sum of the magnetic flux produced by the permanent magnet and the magnetic flux produced by the d-axis component of the motor current can be regarded as, of the magnetic flux of the permanent magnet, the component parallel to the δ-axis. Thus, by inferring the δ-axis magnetic flux by finding the δ-axis component of that sum, it is possible to achieve stable position-sensorless control. Moreover, the δ-axis magnetic flux can be inferred simply by calculating the sum. This requires a very small amount of calculation.

Preferably, for example, the δ-axis magnetic flux inferrer is provided with: a magnetic flux inferrer that infers the δ-axis component of the sum of the magnetic flux produced by the permanent magnet and the magnetic flux produced by the d-axis component of the motor current; and a magnetic flux compensator that compensates the δ-axis component inferred by the magnetic flux inferrer according to the γ-axis component of the motor current and thereby calculates the δ-axis magnetic flux.

In a case where the δ-axis magnetic flux inferrer is configured as described above, the δ-axis magnetic flux obtained as the result of the calculation by the magnetic flux compensator is precisely "the magnetic flux component parallel to the δ-axis of the permanent magnet". The thus calculated δ-axis magnetic flux is the magnetic flux inferred by the magnetic flux inferrer and then compensated according to the γ-axis component of the motor current. This makes it possible to achieve precise position-sensorless control (so that, for example, the axis deviation angle converges precisely at zero) even in a case where the relationship (the magnetic flux produced by the permanent magnet) >> (the magnetic flux produced by the d-axis component of the motor current) does not hold, for example when flux-weakening control is performed and thus γ-axis component of the motor current is comparatively large.

Preferably, for example, the magnetic flux compensator calculates the δ-axis magnetic flux by multiplying the δ-axis component inferred by the magnetic flux inferrer by

$$\Phi_a / ((L_d - L_q)\, i_\gamma + \Phi_a),$$

where $\Phi_a$ represents the armature flux linkage attributable to the permanent magnet, $L_d$ represents the d-axis inductance, Lq represents the q-axis inductance, and $i_\gamma$ represents the γ-axis component of the motor current.

Preferably, for example, the controller is provided with: a calculator that calculates an inferred motor speed based on the δ-axis magnetic flux; and a specified current value calculator that produces a specified current value that the motor current should follow so that the inferred motor speed follows a specified motor speed value fed from outside. In this case, the controller reduces the axis deviation angle by adjusting the inferred motor speed so that the δ-axis magnetic flux converges at zero.

Preferably, for example, the controller reduces the axis deviation angle by adjusting the specified torque value that the torque of the motor should follow so that the δ-axis magnetic flux converges at zero.

Preferably, for example, the controller is provided with: a specified voltage value calculator that produces, by using the motor current and an inferred rotor position, a specified voltage value that represents the voltage to be applied to the motor so that the motor current follows a value commensurate with the specified current value. In this case, the δ-axis magnetic flux inferrer infers the δ-axis magnetic flux based on the γ-axis component of the specified voltage value, the motor current, and the inferred motor speed. Moreover, the controller is further provided with: a position/speed inferrer including a calculator that receives the δ-axis magnetic flux and calculates the inferred motor speed so that the δ-axis magnetic flux converges at zero, and an integrator that integrates the inferred motor speed and thereby calculates the inferred rotor position; and a specified current value calculator that receives a specified motor speed value from outside and produces the specified current value so that the inferred motor speed follows the specified motor speed value.

According to another aspect of the present invention, a motor driving system is provided with: a position-sensorless control circuit configured as described above; a motor controlled by the position-sensorless control circuit; and an inverter that drives the motor.

## BRIEF DESCRIPTION OF THE DRAWINGS

FIG. 1 is a block diagram showing the configuration of a motor driving system according to the present invention;

FIG. 2 is a diagram showing an analysis model of the motor shown in FIG. 1;
FIG. 3 is a diagram showing vectors representing the relationship among the voltages at relevant points in the motor shown in FIG. 1;
FIG. 4 is a diagram showing a practical configuration of the motor driving system of a first embodiment of the present invention;

FIG. 5 is a diagram showing the detailed configuration of the position/speed inferrer shown in FIG. 4;

FIG. 6 is a diagram showing how the δ-axis magnetic flux inferrer shown in FIG. 5 is built with a disturbance observer;

FIG. 7 is a diagram showing a practical configuration of the motor driving system of a second embodiment of the present invention;

FIG. 8 is a diagram showing the detailed configuration of the position/speed inferrer shown in FIG. 7; and

FIG. 9 is a diagram showing the detailed configuration of the δ-axis magnetic flux inferrer shown in FIG. 8.

## DETAILED DESCRIPTION OF PREFERRED EMBODIMENTS

### FIRST EMBODIMENT

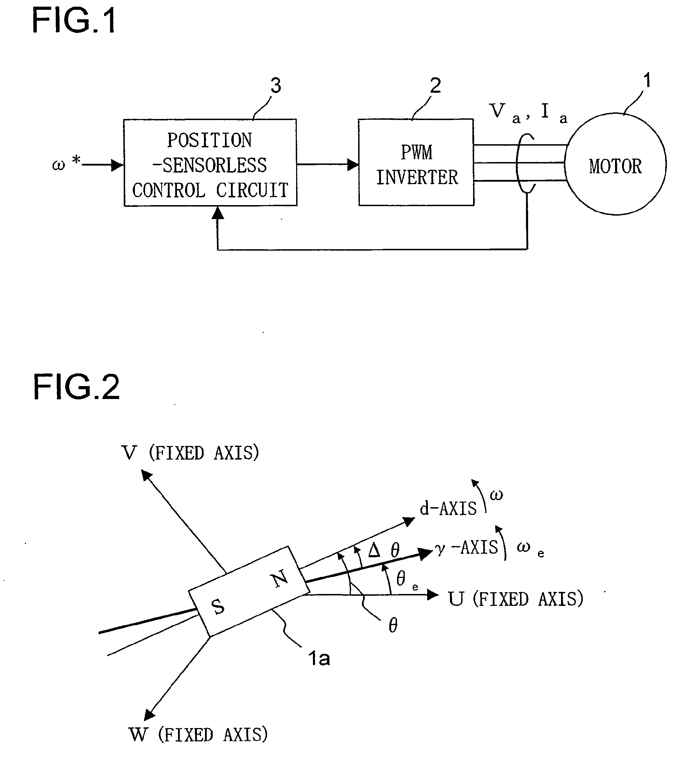

A first embodiment of the present invention will be described in detail below. FIG. 1 is a block diagram showing the configuration of a motor driving system according to the present invention. Reference numeral 1 indicates a three-phase permanent-magnet synchronous motor 1 (hereinafter also referred to simply as the "motor 1") that has a permanent magnet provided in a rotor (unillustrated) and has an armature winding provided in a stator (unillustrated). Reference numeral 2 indicates a PWM (pulse-width modulation) inverter that feeds the motor 1 with a three-phase alternating-current voltage in U-, V-, and W-phases according to the position of the rotor of the motor 1. The voltage fed to the motor 1 is referred to as the applied motor voltage (armature voltage) $V_a$, and the current fed to the motor 1 is referred to as the motor current (armature current) $I_a$. Reference numeral 3 indicates a position-sensorless control circuit that infers, based on the motor current $I_a$, the rotor position or the like of the motor 1 and then feeds the PWM inverter 2 with a signal that makes the motor 1 rotate at a desired rotation speed. The desired rotation speed is fed as a specified motor speed value $\omega^*$ from an unillustrated CPU (central processing unit) or the like to the position-sensorless control circuit 3.

Next, for easy understanding of the operation of the position-sensorless control circuit 3, the principle on which the present invention works will be described. FIG. 2 is a diagram showing an analysis model of the three-phase permanent-magnet synchronous motor 1. In the following description of the working principle, the permanent magnet and the armature winding refer to those provided in the motor 1.

In FIG. 2 are shown the U-, V-, and W-phase armature winding fixed axes. Reference numeral 1a indicates the permanent magnet provided in the rotor of the motor 1. Assume a rotational coordinate system that rotates at the same speed as the magnetic flux produced by the permanent magnet. In this rotational coordinate system, the direction of the magnetic flux of the permanent magnet is referred to as the d-axis, and the axis that is inferred as corresponding to the d-axis for the purpose of control is referred to as the γ-axis. Although not illustrated, the axis in the phase 90 electrical degrees leading ahead of the d-axis is referred to as the q-axis, and the axis inferred in the phase 90 electrical degrees leading ahead of the γ-axis is referred to as the δ-axis. Thus, the rotational coordinate system has the d- and q-axes as its coordinate axes, and these d-q coordinate axes will hereinafter be referred to as the real axes. On the other hand, the rotation coordinate system (inferred rotational coordinate system) inferred for the purpose of control has the γ- and δ-axes as its coordinate axes, and these γ-δ coordinate axes will hereinafter be referred to as the control axes.

The real axes rotate at a rotation speed of ω (the real motor speed ω). The control axes also rotate at a rotation speed of $\omega_e$ (the inferred motor speed $\omega_e$). With respect to the real axes in the middle of rotation, the phase of the d-axis at a given moment is represented by θ (the real rotor position θ) relative to the U-phase armature winding fixed axis. Likewise, with respect to the control axes in the middle of rotation, the phase of the γ-axis at a given moment is represented by $\theta_e$ (the inferred rotor position $\theta_e$) relative to the U-phase armature winding fixed axis. Then, the axis deviation angle $\Delta\theta$ between the real and control axes is given by $\Delta\theta = \theta - \theta_e$.

Generally, the voltage equation on the real axes (d-q coordinate axes) is expressed by formula (1) below.

$$\begin{bmatrix} v_d \\ v_q \end{bmatrix} = \begin{bmatrix} R_a + p\,L_d & -\omega\,L_q \\ \omega\,L_d & R_a + p\,L_q \end{bmatrix} \begin{bmatrix} i_d \\ i_q \end{bmatrix} + \begin{bmatrix} 0 \\ \omega\,\Phi_a \end{bmatrix} \tag{1}$$

Here, $v_d$ and $v_q$ represent the d- and q-axis components of the applied motor voltage $V_a$, which are called the d- and q-axis voltages, respectively; $R_a$ represents the motor resistance (the resistance of the armature winding); $L_d$ and Lq represent d- and q-axis inductances (the d- and q-axis components of the inductance of the armature winding), respectively; $i_d$ and iq represent the d- and q-axis components of the motor current $I_a$, which are called the d- and q-axis currents, respectively; $\Phi_a$ represents the armature flux linkage attributable to the permanent magnet; and p represents an differentiation operator.

Formula (1) above can be rearranged into formula (2) below. Formula (2) is called the expanded induction voltage equation (expanded electromotive force equation) on the real axes (d-q coordinate axes). The element $E_{ex}$ in formula (2) is expressed by formula (3) below, and is called the expanded induction voltage (expanded electromotive force).

$$\begin{bmatrix} v_d \\ v_q \end{bmatrix} = \begin{bmatrix} R_a + p\,L_d & -\omega\,L_q \\ \omega\,L_q & R_a + p\,L_d \end{bmatrix} \begin{bmatrix} i_d \\ i_q \end{bmatrix} + \begin{bmatrix} 0 \\ E_{ex} \end{bmatrix} \tag{2}$$

$$E_{ex} = \omega\,((L_d - L_q)\,i_d + \Phi_a) - (L_d - L_q)\,(p\,i_q) \tag{3}$$

Converting formula (2) above, which is on the real axes (d-q coordinate axes), into one on the control axes ($\gamma$-$\delta$ coordinate axes) gives formula (4) below.

$$\begin{bmatrix} v_\gamma \\ v_\delta \end{bmatrix} = \begin{bmatrix} R_a + p\,L_d & -\omega\,L_q \\ \omega\,L_q & R_a + p\,L_d \end{bmatrix} \begin{bmatrix} i_\gamma \\ i_\delta \end{bmatrix} + E_{ex} \begin{bmatrix} -\sin\Delta\theta \\ \cos\Delta\theta \end{bmatrix} + (\omega_e - \omega)L_d \begin{bmatrix} -i_\delta \\ i_\gamma \end{bmatrix} \tag{4}$$

Here, $v_\gamma$ and $v_\delta$ represent the $\gamma$- and $\delta$-axis components of the applied motor voltage $V_a$, which are called the $\gamma$- and $\delta$-axis voltages, respectively; and $i_\gamma$ and $i_\delta$ represent the $\gamma$- and $\delta$-axis components of the motor current $I_a$, which are called the $\gamma$- and $\delta$-axis currents, respectively. The magnetic flux obtained when the transient term (the second term in the right side) of formula (3), which expresses the expanded induction voltage $E_{ex}$ is defined as the expanded magnetic flux $\Phi_{ex,}$ which is expressed by formula (5) below.

$$\Phi_{ex} = (L_d - L_q)\,i_d + \Phi_a \tag{5}$$

So long as the motor speed and the load are constant, the magnitude of the motor current and the phase vary very little. Thus, the second term in the right side of formula (3), which represents the differentiated q-axis current, is so much smaller than $\omega\Phi_{ex}$ as to be regarded as zero. Moreover, so long as the motor 1 is driven while in synchronism, the real motor speed $\omega$ and the inferred motor speed $\omega_e$ are very close together. Thus, the third term in the right side of formula (4) also is so much smaller than $\omega\Phi_{ex}$ as to be regarded as zero. When the second term in the right side of formula (3) and the third term in the right side of formula (4) are ignored, formula (4) can be rearranged into formula (6) below.

$$\begin{aligned} \begin{bmatrix} v_\gamma \\ v_\delta \end{bmatrix} &= \begin{bmatrix} R_a + p\,L_d & -\omega\,L_q \\ \omega\,L_q & R_a + p\,L_d \end{bmatrix} \begin{bmatrix} i_\gamma \\ i_\delta \end{bmatrix} + E_{ex} \begin{bmatrix} -\sin\Delta\theta \\ \cos\Delta\theta \end{bmatrix} \\ &= \begin{bmatrix} R_a + p\,L_d & -\omega\,L_q \\ \omega\,L_q & R_a + p\,L_d \end{bmatrix} \begin{bmatrix} i_\gamma \\ i_\delta \end{bmatrix} + \omega\,\Phi_{ex} \begin{bmatrix} -\sin\Delta\theta \\ \cos\Delta\theta \end{bmatrix} \end{aligned} \tag{6}$$

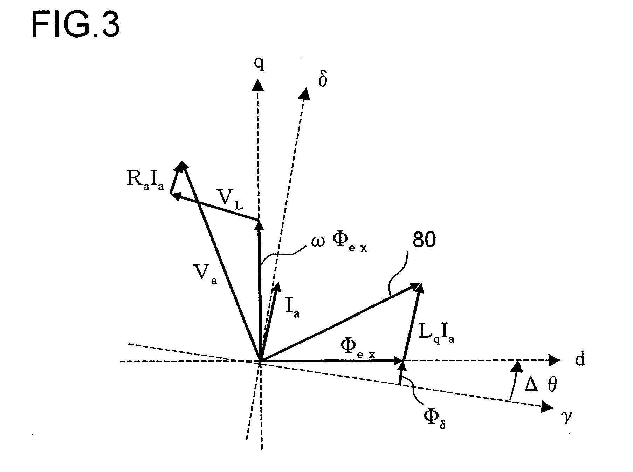

FIG. 3 is a diagram showing vectors representing the relationship among the voltages at relevant points in the motor 1. The applied motor voltage $V_a$ is represented as the sum of the expanded induction voltage $E_{ex} = \omega\Phi_{ex}$, the vector $R_a \cdot I_a$ of the voltage drop across the motor resistance $R_a$, and the vector $V_L$ of the voltage drop across the inductance of the armature winding. Since the expanded magnetic flux $\Phi_{ex}$ is the sum of the magnetic flux $\Phi_a$ produced by the permanent magnet and the magnetic flux $(L_d - L_q)\,i_d$ produced by the d-axis current, the orientation of the vector coincides with that of the d-axis. The vector represented as $L_q \cdot I_a$ is the vector of the magnetic flux produced by the q-axis inductance and the motor current $I_a$, and reference numeral 80 indicates the composite vector of the magnetic fluxes

$\Phi_{ex}$ and $L_q \cdot I_a$.

The δ-axis component of the expanded magnetic flux $\Phi_{ex}$ is represented by $\Phi_\delta$. Hence, the formula $\Phi_\delta = \Phi_{ex} \cdot \sin \Delta\theta$ holds. Expanding and rearranging the first row of the matrix of formula (6) above gives formula (7) below, where s represents the Laplace operator.

$$\Phi_{ex}\sin\Delta\theta = -\left(\frac{v_\gamma - (L_d s + R_a) i_\gamma}{\omega} + L_q i_\delta\right) \tag{7}$$

Usually, the magnetic flux produced by the permanent magnet is far larger than that produced by the d-axis current such that $\Phi_a \gg (L_d - L_q) i_d$. Hence, $\Phi_{ex}$ can be regarded as constant, that is, $\Phi_{ex} \approx \Phi_a$. Throughout the following description of the currently discussed embodiment, it is assumed that $\Phi_{ex}$ can be regarded as constant. When it is further assumed that the axis deviation angle $\Delta\theta$ is so small that the approximation $\sin\Delta\theta \approx \theta$ holds, then, with reference to formula (7), formula (8) below holds.

$$\Phi_\delta = \Phi_{ex}\sin\Delta\theta = -\left(\frac{v_\gamma - (L_d s + R_a) i_\gamma}{\omega} + L_q i_\delta\right)$$
$$\approx \Phi_a\sin\Delta\theta$$
$$\approx \Phi_a\Delta\theta \tag{8}$$

As will be understood from formula (8) above, $\Phi_\delta \approx$ (constant value) $\times \Delta\theta$. Thus, when $\Phi_\delta$ is so controlled as to converge at zero, the axis deviation angle $\Delta\theta$ converges at zero. This will be understood also from the vector diagram of FIG. 3. Moreover, in a case where the approximation $\Phi_{ex} \approx \Phi_a$ is assumed, since $\Phi_\delta$ corresponds to the δ-axis component of $\Phi_a$, it can also be said that "when the δ-axis component of $\Phi_a$ is so controlled as to converge at zero, the axis deviation angle $\Delta\theta$ converges at zero."

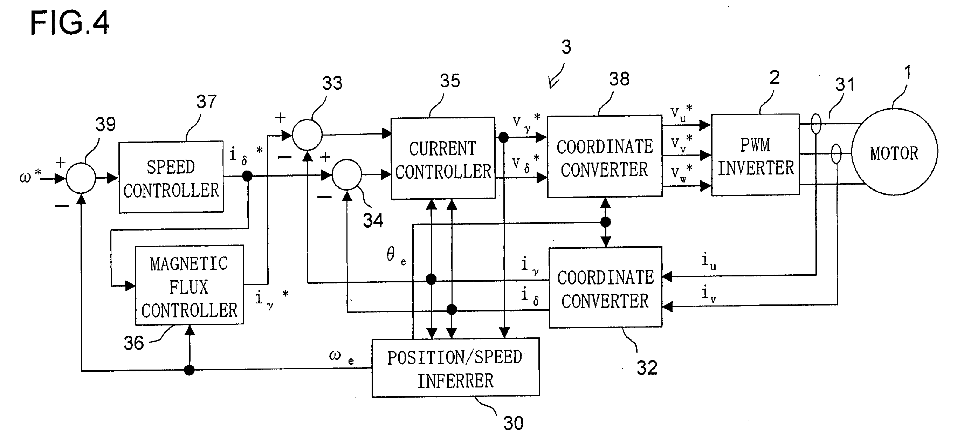

A practical configuration for "controlling the δ-axis component of $\Phi_a$ so that it converges at zero" is shown in FIG. 4. In FIG. 4, such parts as are found also in FIG. 1 are identified with common reference numerals and symbols, and no detailed explanations thereof will be repeated.

In FIG. 4, reference numeral 31 indicates a current detection circuit that detects, with respect to the motor current $I_a$ fed from the PWM inverter 2 to the motor 1, the U- and V-phase currents $i_u$ and $i_v$, respectively. The results of the detection of the U- and V-phase currents $i_u$ and $i_v$ by the current detection circuit 31 are fed to a coordinate converter 32, which then converts them, based on the inferred rotor position $\theta_e$ fed from a position/speed inferrer (position/ speed estimator) 30, into γ- and δ-axis currents $i_\gamma$ and $i_\delta$ on the rotational coordinate system inferred for the purpose of control. This conversion is performed by the use of formula (9) below.

$$\begin{bmatrix} i_\gamma \\ i_\delta \end{bmatrix} = \sqrt{2}\begin{bmatrix} \sin(\theta_e + \pi/3) & \sin\theta_e \\ \cos(\theta_e + \pi/3) & \cos\theta_e \end{bmatrix}\begin{bmatrix} i_u \\ i_v \end{bmatrix} \tag{9}$$

A subtracter 33 subtracts the γ-axis current $i_\gamma$ from a specified γ-axis current value $i_\gamma^*$ fed from a magnetic flux controller 36 to calculate the current error ($i_\gamma^*$ - iy). Likewise, a subtracter 34 subtracts the δ-axis current $i_\delta$ from a specified δ-axis current value $i_\delta^*$ fed from a speed controller 37 to calculate the current error ($i_\delta^*$ - $i_\delta$).

A current controller 35 receives the current errors from the subtracters 33 and 34 and the values of the γ- and δ-axis currents $i_\gamma$ and $i_\delta$ from the coordinate converter 32, and outputs specified γ- and δ-axis voltage values $V_\gamma^*$ and $V_\delta^*$ so that the γ-axis current $i_\gamma$ follows the specified γ-axis current value $i_\gamma^*$ and in addition that the δ-axis current $i_\delta$ follows the specified δ-axis current value $i_\delta^*$. A coordinate converter 38 performs, based on the inferred rotor position $\theta_e$ fed from the position/speed inferrer 30, reverse conversion on the specified γ- and δ-axis voltage values $V_\gamma^*$ and $V_\delta^*$ to produce specified three-phase voltage values consisting of specified U-, V-, and W-axis voltage values $v_u^*$, $v_v^*$, and $v_w^*$, and feeds them to the PWM inverter 2. This reverse conversion is performed by the use of formula (10) consisting of two equations noted below. Based on the specified three-phase voltage values, which represent the voltages to be applied to the motor 1, the PWM inverter 2 produces pulse-width-modulated signals, with which it drives the motor 1.

$$\begin{bmatrix} v_u^* \\ v_v^* \end{bmatrix} = \sqrt{\frac{2}{3}} \begin{bmatrix} \cos\theta_e & -\sin\theta_e \\ \cos(\theta_e - 2\pi/3) & -\sin(\theta_e - 2\pi/3) \end{bmatrix} \begin{bmatrix} v_\gamma^* \\ v_\delta^* \end{bmatrix} \qquad (10)$$

$$v_w^* = -(v_u^* + v_v^*)$$

The coordinate converter 32, the subtracters 33 and 34, the current controller 35, and the coordinate converter 38 together form a specified voltage value calculator that, by using the motor current (the U- and V-phase currents $i_u$ and $i_v$) detected by the current detection circuit 31 and the inferred motor speed $\omega_e$, produces specified three-phase voltage values so that the motor current follows values commensurate with the specified current values (the specified $\gamma$- and $\delta$-axis current values $i_\gamma^*$ and $i_\delta^*$).

A subtracter 39 subtracts the inferred motor speed $\omega_e$ fed from the position/speed inferrer 30 from the specified motor speed value $\omega^*$. Based on the result ($\omega^* - \omega_e$) of the subtraction by the subtracter 39, the speed controller 37 produces the specified $\delta$-axis current value $i_\delta^*$. This specified $\delta$-axis current value $i_\delta^*$ represents the current value that the $\delta$-axis current $i_\delta$, that is, the $\delta$-axis component of the motor current $I_a$, should follow. Since the torque of the motor 1 is proportional to the $\delta$-axis current $i_\delta$, the specified $\delta$-axis current value $i_\delta^*$ can be said to be a value commensurate with a specified torque value.

Based on the inferred motor speed $\omega_e$ fed from the position/speed inferrer 30 and the specified $\delta$-axis current value $i_\delta^*$ fed from the speed controller 37, the magnetic flux controller 36 produces the specified $\gamma$-axis current value $i_\gamma^*$. This specified $\gamma$-axis current value $i_\gamma^*$ represents the current value that the $\gamma$-axis current $i_\gamma$, that is, the $\gamma$-axis component of the motor current $I_a$, should follow.

The magnetic flux controller 36, the speed controller 37, and the subtracter 39 together form a specified current value calculator that produces specified current values (the specified $\gamma$- and $\delta$-axis current values $i_\gamma^*$ and $i_\delta^*$) so that the inferred motor speed $\omega_e$ follows the specified motor speed value $\omega^*$.

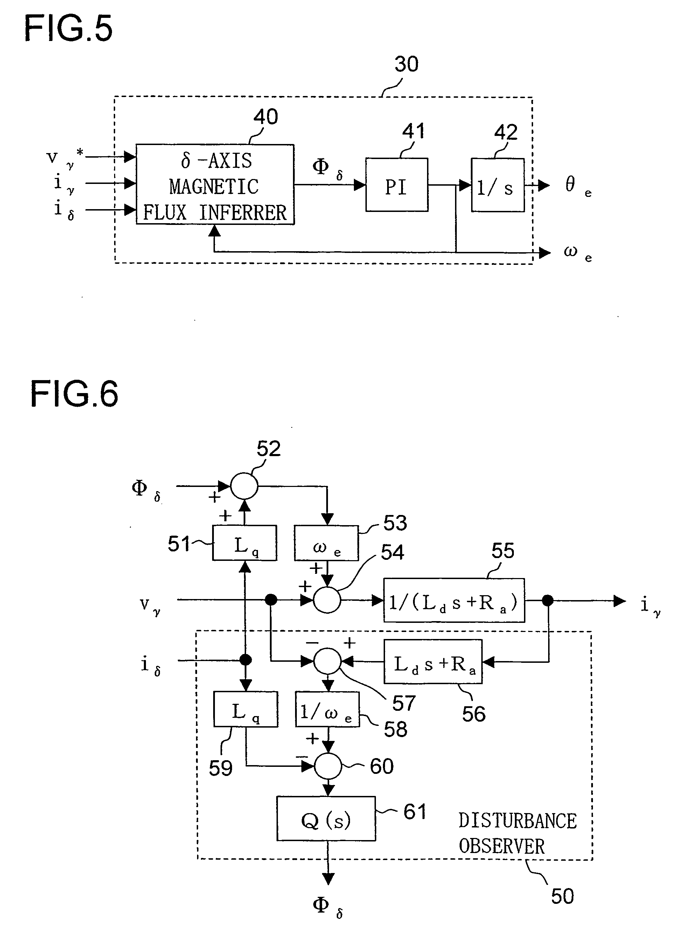

Based on $i_\gamma$ and $i_\delta$ fed from the coordinate converter 32 and the $V_\gamma^*$ fed from the current controller 35, the position/speed inferrer 30 infers the inferred motor speed $\omega_e$ and the inferred rotor position $\theta_e$. The detailed configuration of the position/speed inferrer 30 is shown in FIG. 5. The position/speed inferrer 30 is composed of a $\delta$-axis magnetic flux inferrer 40, a proportional-plus-integral calculator (calculator) 41, and an integrator 42.

Based on $i_\gamma$, $i_\delta$, and $v_\gamma^*$, and also based on $\omega_e$ fed from the proportional-plus-integral calculator 41, the $\delta$-axis magnetic flux inferrer 40 calculates (infers) the $\delta$-axis component $\Phi_\delta$ of the sum of the magnetic flux $\Phi_a$ produced by the permanent magnet and the magnetic flux $(L_d - L_q) i_d$ produced by the d-axis current. This calculation is performed by the use of formula (8). Specifically, the $\delta$-axis magnetic flux inferrer 40 calculates $\Phi_\delta$ by using formula (11) below.

$$\Phi_\delta = -\left( \frac{v_\gamma^* - (L_d s + R_a) i_\gamma}{\omega_e} + L_q i_\delta \right) \qquad (11)$$

As described previously, in a case where the approximation $\Phi_{ex} \approx \Phi_a$ is assumed, since $\Phi_\delta$ corresponds to the $\delta$-axis component of $\Phi_a$, it can be said that the $\delta$-axis magnetic flux inferrer 40 infers the magnetic flux $\Phi_\delta$ that can be regarded as the $\delta$-axis magnetic flux, that is, of the magnetic flux $\Phi_a$ produced by the permanent magnet, the component parallel to the d-axis.

In cooperation with the $\delta$-axis magnetic flux inferrer 40, the proportional-plus-integral calculator 41 calculates the inferred motor speed $\omega_e$ so that $\Phi_\delta$ calculated by the $\delta$-axis magnetic flux inferrer 40 converges at zero, and then feeds the calculated $\omega_e$ to the $\delta$-axis magnetic flux inferrer 40, the integrator 42, the magnetic flux controller 36, and the subtracter 39. The integrator 42 integrates the inferred motor speed $\omega_e$ and thereby calculates the inferred rotor position $\theta_e$.

The configuration shown in FIGS. 4 and 5 makes it possible for the axis deviation angle $\Delta\theta$ to converge at zero. To permit the axis deviation angle $\Delta\theta$ to converge at zero, it is necessary only to infer $\Phi_\delta$ that can be regarded as the $\delta$-axis component of the $\Phi_a$. This requires a very small amount of calculation (as compared with, for example, what is disclosed in Patent Publication 1 mentioned earlier). Moreover, since $\Phi_\delta$ does not depend on the rotation speed of the motor, the axis deviation angle $\Delta\theta$ can be stably made to converge at zero.

The coordinate converters 32 and 38, the subtracters 33, 34, and 39, the current controller 35, the magnetic flux controller 36, the speed controller 37, the proportional-plus-integral calculator 41, and the integrator 42 together function as a controller that adjusts the inferred motor speed $\omega_e$ so that the magnetic flux $\Phi_\delta$ inferred by the $\delta$-axis magnetic flux inferrer 40 converges at zero. The position-sensorless control circuit 3 is composed of the components 30 to 39.

The current controller 35 performs necessary calculations by using formula (12) consisting of two equations noted below.

$$v_\gamma{}^* = (K_{c\,p} + \frac{K_{c\,i}}{s})\,(i_\gamma{}^* - i_\gamma) - \omega_e L_q i_\delta$$
$$v_\delta{}^* = (K_{c\,p} + \frac{K_{c\,i}}{s})\,(i_\delta{}^* - i_\delta) + \omega_e(L_d i_\gamma + \Phi_a) \tag{12}$$

The magnetic flux controller 36, the speed controller 37, and the proportional-plus-integral calculator 41 performs their respective calculations by using formulae (13), (14), and (15), respectively, below.

$$i_\gamma{}^* = \frac{\Phi_a}{2(L_q - L_d)} - \sqrt{\frac{\Phi_a{}^2}{4(L_q - L_d)^2} + i_\delta{}^{*\,2}} \tag{13}$$

$$i_\delta{}^* = (K_{s\,p} + K_{s\,i}/\,s)\cdot(\omega^* - \omega_e) \tag{14}$$

$$\omega_e = (K_p + K_i/\,s)\cdot\Phi_\delta \tag{15}$$

Here, $K_{cp}$, $K_{sp}$, and $K_p$ represent constants of proportionality (proportional gains), and $K_{ci}$, $K_{si}$, and $K_i$ represent constants of integration (integral gains). These constants are set previously at the time of the design of the motor driving system. Likewise, $L_d$, $L_q$, $R_a$, and $\Phi_a$ also are set previously at the time of the design of the motor driving system.

**Disturbance Observer**

Instead of calculating $\Phi_\delta$ directly by performing the calculation of formula (11), it is also possible to calculate $\Phi_\delta$ with a $\delta$-axis magnetic flux inferrer that is built with a disturbance observer based on the concept that $\Phi_\delta$ is regarded as an external disturbance. For example, in a case where the disturbance observer includes a filter configured as a first-order filter, $\Phi_\delta$ is expressed by formula (16) below. In formula (16), g represents the filter gain.

$$\Phi_\delta = \frac{g}{s + g}\left(\frac{-v_\gamma + (L_d s + R_a)\,i_\gamma}{\omega_e} - L_q i_\delta\right) \tag{16}$$

An example of its configuration is shown in FIG. 6. A multiplier 51 multiplies $i_\delta$ by $L_q$, and an adder 52 adds the resulting product to $\Phi_\delta$. A multiplier 53 multiplies the resulting sum by $\omega_e$, and an adder 54 adds $v_\gamma$ to the resulting product. A multiplier 55 multiplies the sum calculated by the adder 54 by $1 / (L_d s + R_a)$. The product calculated by the multiplier 55 corresponds to $i_\gamma$. A multiplier 56 multiplies the product calculated by the multiplier 55 again by $(L_d s + R_a)$. A subtracter 57 subtracts $v_\gamma$ from the product calculated by the multiplier 56. A multiplier 58 multiplies the difference calculated by the subtracter 57 by $1 / \omega_e$. A multiplier 59 multiplies $i_\delta$ by Lq. A subtracter 60 subtracts the product calculated by the multiplier 59 from the product calculated by the multiplier 58. A multiplier 61 multiplies the difference calculated by the subtracter 60 by a filter $Q(s) = g / (s + g)$ to determine $\Phi_\delta$. In the diagram, the part enclosed by broken lines and including the components 56 to 61 corresponds to the disturbance observer 50.

**Torque Adjustment**

The detailed description thus far given deals with a case where the magnetic flux $\Phi_\delta$ is made to converge at zero through the adjustment of the inferred motor speed $\omega_e$. Instead of adjusting the inferred motor speed $\omega_e$, it is also possible to make the magnetic flux $\Phi_\delta$ converge at zero by adjusting the specified torque value fed to the motor 1 (the value of the toque that the torque of the motor 1 should follow). In this case, the configuration shown in FIGS. 4 and 5 needs to be appropriately modified (for example, since the torque of the motor 1 is proportional to the $\delta$-axis current $i_\delta$, the position/speed inferrer 30 should feed the subtracter 33 with a necessary control signal, etc.). Since such modification is conventionally well known, no separate diagram or description thereof will be given.

**SECOND EMBODIMENT**

Next, a second embodiment of the present invention will be described in detail below. The reference numerals and symbols appearing in the following description of the second embodiment are the same as those used in the description of the first embodiment, and therefore no explanation of common features will be repeated. The second embodiment is directed to a case where the variation of the expanded magnetic flux $\Phi_{ex}$ cannot be ignored and therefore $\Phi_{ex}$ cannot be approximated as constant as in the first embodiment. Based on formula (5) above, $\Phi_\delta$, which is the $\delta$-axis component of the $\Phi_{ex}$, can be expressed by formula (17) below. Here, it is assumed that the calculatable $\gamma$- and d-axis currents $i_\gamma$ and $i_d$ are equal (since $\Delta\theta$ is so controlled as to converge at zero, $i_\gamma$ and $i_d$ can safely be regarded as equal).

$$\Phi_\delta = \Phi_{ex}\sin\Delta\theta = ((L_d - L_q)\, i_\gamma + \Phi_a)\ \sin\Delta\theta \tag{17}$$

When a magnetic flux $\Phi_{\delta'}$ is defined as $K(i_\gamma)\Phi_\delta$, rearranging formula (17) by the use of formula (8) above gives formula (18) below. Here, it is assumed that the approximation $\sin\Delta\theta \approx \Delta\theta$ holds.

$$\begin{aligned}\Phi_\delta{}' = K(i_\gamma)\,\Phi_\delta &= -K(i_\gamma)\left(\frac{v_\gamma - (L_d s + R_a)\, i_\gamma}{\omega} + L_q i_\delta\right)\\ &= \Phi_a \sin\Delta\theta\\ &\approx \Phi_a \Delta\theta\end{aligned} \tag{18}$$

where

$$K(i_\gamma) = \frac{\Phi_a}{(L_d - L_q)\, i_\gamma + \Phi_a}$$

Here, since the approximation $\Phi_{ex} \approx \Phi_a$ is not used as in the first embodiment, this magnetic flux $\Phi_{\delta'}$ is exactly the $\delta$-axis component of $\Phi_a$. As will be understood from formula (18), $\Phi_{\delta'} \approx$ (constant value) $\times \Delta\theta$. Thus, when this $\Phi_{\delta'}$ is so controlled as to converge at zero, the axis deviation angle $\Delta\theta$ converges at zero.

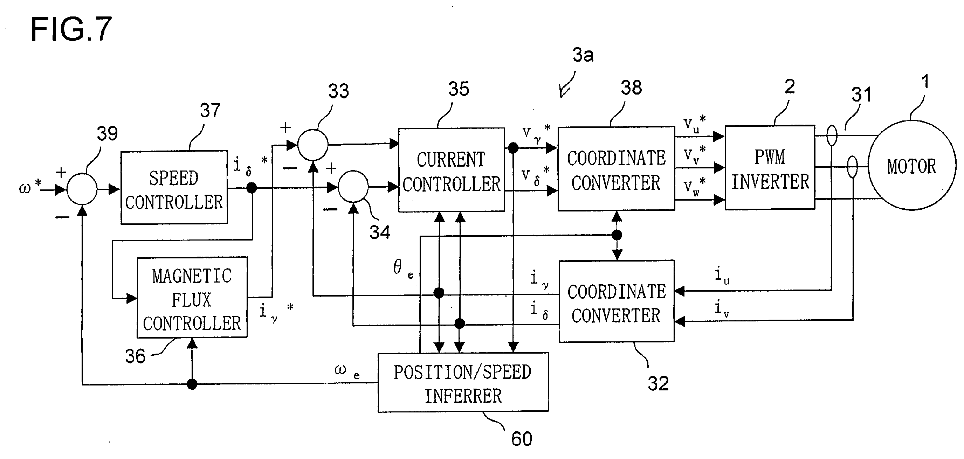

A practical configuration for "controlling the magnetic flux $\Phi_{\delta'}$, that is, the $\delta$-axis component of $\Phi_a$, so that it converges at zero" is shown in FIG. 7. In FIG. 7, such parts as are found also in FIG. 4 are identified with common reference numerals and symbols, and no detailed explanations thereof will be repeated. The motor driving system of the second embodiment differs from that of the first embodiment in that the position/speed inferrer 30 used in the first embodiment is replaced with a position/speed inferrer 60; in other respects, the two motor driving systems are similar.

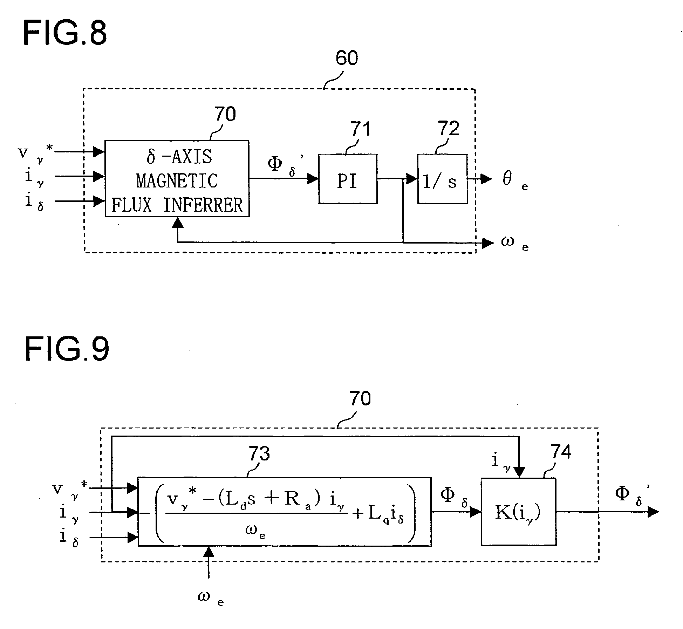

Based on $i_\gamma$ and $i_\delta$ fed from the coordinate converter 32 and the $v_\gamma{}^*$ fed from the current controller 35, the position/speed inferrer 60 infers the inferred motor speed $\omega_e$ and the inferred rotor position $\theta_e$. The detailed configuration of the position/speed inferrer 60 is shown in FIG. 8. The position/speed inferrer 60 is composed of a $\delta$-axis magnetic flux inferrer 70, a proportional-plus-integral calculator (calculator) 71, and an integrator 72. As shown in FIG. 9, the $\delta$-axis magnetic flux inferrer 70 is composed of a magnetic flux inferrer 73 and a magnetic flux compensator 74.

Based on $i_\gamma$, $i_\delta$, and $v_\gamma{}^*$, and also based on $\omega_e$ fed from the proportional-plus-integral calculator 71, the magnetic flux inferrer 73 calculates (infers) the $\delta$-axis component $\Phi_\delta$ of the sum of the magnetic flux $\Phi_a$ produced by the permanent magnet and the magnetic flux $(L_d - L_q)\, i_d$ produced by the d-axis current. This calculation is performed by the use of formula (11). By using $i_\gamma$ fed from the coordinate converter 32, the magnetic flux compensator 74 multiplies $\Phi_\delta$ calculated by the magnetic flux inferrer 73 by $K(i_\gamma)$ to calculate $\Phi_{\delta'}$. In this way, the $\delta$-axis magnetic flux inferrer 70 infers the $\delta$-axis

magnetic flux $\Phi_{\delta'}$, that is, of the magnetic flux $\Phi_a$, the component parallel to the $\delta$-axis. As the value of $K(i_\gamma)$, a previously calculated table value may be used to calculate $\Phi_{\delta'}$; alternatively, instead of using the part of the formula (18) for calculating $K(i_\gamma)$, an experimentally determined value may be used to calculate $\Phi_{\delta'}$. Advisably, such a table value or an experimentally determined value is stored in an unillustrated memory provided within the magnetic flux compensator 74. Needless to say, the value of $K(i_\gamma)$ that suits $i_\gamma$ may be calculated by the use of formula (18) whenever necessary.

In cooperation with the $\delta$-axis magnetic flux inferrer 70, the proportional-plus-integral calculator (calculator) 71 calculates the inferred motor speed $\omega_e$ so that $\Phi_{\delta'}$ calculated by the $\delta$-axis magnetic flux inferrer 70 converges at zero, and then feeds the calculated $\omega_e$ to the $\delta$-axis magnetic flux inferrer 70, the integrator 72, the magnetic flux controller 36, and the subtracter 39. The integrator 72 integrates the inferred motor speed $\omega_e$ and thereby calculates the inferred rotor position $\theta_e$.

The configuration shown in FIGS. 7, 8, and 9 makes it possible for the axis deviation angle $\Delta\theta$ to converge at zero. To permit the axis deviation angle $\Delta\theta$ to converge at zero, it is necessary only to infer $\Phi_{\delta'}$, that is, the $\delta$-axis component of the $\Phi_a$. This requires a very small amount of calculation (as compared with, for example, what is disclosed in Patent Publication 1 mentioned earlier). Moreover, since $\Phi_{\delta'}$ does not depend on the rotation speed of the motor, the axis deviation angle $\Delta\theta$ can be stably made to converge at zero.

What $\Phi_{\delta'}$ represent is $\Phi_\delta$ as compensated according to the $\gamma$-axis current $i_\gamma$. Thus, the axis deviation angle $\Delta\theta$ can be made to converge precisely at zero even in a case where $\Phi_a \gg (L_d - L_q) i_d$ does not hold and thus $\Phi_{ex}$ cannot be approximated as constant, for example when flux-weakening control is performed and thus $i_\gamma^*$ is comparatively great.

The coordinate converters 32 and 38, the subtracters 33, 34, and 39, the current controller 35, the magnetic flux controller 36, the speed controller 37, the proportional-plus-integral calculator 71, and the integrator 72 together function as a controller that adjusts the inferred motor speed $\omega_e$ so that the magnetic flux $\Phi_{\delta'}$ inferred by the $\delta$-axis magnetic flux inferrer 70 converges at zero. The position-sensorless control circuit 3a is composed of the components 31 to 39 and 60.

The proportional-plus-integral calculator 71 performs predetermined calculations by the use of formula (19) below.

$$\omega_e = (K_p + K_i / s) \cdot \Phi_\delta{}' \qquad (19)$$

As in the first embodiment, $K_p$ and $K_i$ represent a constant of proportionality (proportional gain) and a constant of integration (integral gain), respectively. Both these constants are set previously at the time of the design of the motor driving system. Likewise, $L_d$, $L_q$, $R_a$, and $\Phi_a$ also are set previously at the time of the design of the motor driving system.

As described previously in connection with the first embodiment, $\Phi_{\delta'}$ may be calculated with a $\delta$-axis magnetic flux inferrer that is built with a disturbance observer based on the concept that $\Phi_{\delta'}$ is regarded as an external disturbance. As described previously in connection with the first embodiment, instead of adjusting the inferred motor speed $\omega_e$, it is also possible to make the magnetic flux $\Phi_{\delta'}$ converge at zero by adjusting the specified torque value fed to the motor 1 (the value of the toque that the torque of the motor 1 should follow).

**MODIFICATIONS AND VARIATIONS**

The present invention is applicable both to a non-salient-pole motor in which $L_d$ and Lq are equal and to a salient-pole motor in which $L_d$ and Lq differ. In a case where a non-salient-pole motor is used, since $L_d$ and Lq are equal, it is preferable to adopt the first embodiment.

The current detection circuit 31 may be so configured, as shown in FIG. 4 and 7, as to directly detect the motor current $I_a$ (for example, by inserting a resistor in the path via which the motor current $I_a$ flows and detecting the voltage drop across the resistor), or may alternatively be so configured as to detect the motor current $I_a$ by reproducing it from the instantaneous current in the supply-side DC current.

The present invention is suitable for a position-sensorless control circuit for a synchronous motor that requires position-sensorless control, and for a motor driving system including such a synchronous motor.

**Claims**

1. A position-sensorless control circuit for controlling a motor in such a way as to reduce an axis deviation angle between a d-axis and a $\gamma$-axis, the d-axis being an axis parallel to a magnetic flux produced by a permanent magnet used as a rotor, the $\gamma$-axis being an axis inferred for a purpose of control as corresponding to the d-axis, a $\delta$-axis being an axis inferred as 90 electrical degrees leading ahead of the $\gamma$-axis,

wherein the position-sensorless control circuit comprises:

a δ-axis magnetic flux inferrer that infers, of δ-axis and γ-axis magnetic fluxes, which are the components of the magnetic flux produced by the permanent magnet parallel to the δ-axis and the γ-axis respectively, only the δ-axis magnetic flux based on the motor current flowing through an armature winding of the motor; and '
a controller that controls the motor so that the δ-axis magnetic flux converges at zero based on only the δ-axis magnetic flux of the γ-axis and δ-axis magnetic fluxes, thereby reducing the axis deviation angle.

**2.** The position-sensorless control circuit of claim 1,
wherein the δ-axis magnetic flux inferrer infers the δ-axis magnetic flux by finding a δ-axis component of a sum of the magnetic flux produced by the permanent magnet and a magnetic flux produced by a d-axis component of the motor current.

**3.** The position-sensorless control circuit of claim 1,
wherein the δ-axis magnetic flux inferrer comprises:

a magnetic flux inferrer that infers a δ-axis component of a sum of the magnetic flux produced by the permanent magnet and a magnetic flux produced by a d-axis component of the motor current; and
a magnetic flux compensator that compensates the δ-axis component inferred by the magnetic flux inferrer according to a γ-axis component of the motor current and thereby calculates the δ-axis magnetic flux.

**4.** The position-sensorless control circuit of claim 3,
wherein the magnetic flux compensator calculates the δ-axis magnetic flux by multiplying the δ-axis component inferred by the magnetic flux inferrer by

$$\Phi_a / ((L_d - L_q)\, i_\gamma + \Phi_a),$$

where $\Phi_a$ represents an armature flux linkage attributable to the permanent magnet, $L_d$ represents a d-axis inductance, $L_q$ represents a q-axis inductance, and $i_\gamma$ represents the γ-axis component of the motor current.

**5.** The position-sensorless control circuit of one of claims 1 to 4,
wherein the controller comprises:

a calculator that calculates an inferred motor speed based on the δ-axis magnetic flux; and
a specified current value calculator that produces a specified current value that the motor current should follow so that the inferred motor speed follows a specified motor speed value fed from outside, and

wherein the controller reduces the axis deviation angle by adjusting the inferred motor speed so that the δ-axis magnetic flux converges at zero.

**6.** The position-sensorless control circuit of one of claims 1 to 4,
wherein the controller reduces the axis deviation angle by adjusting a specified torque value that a torque of the motor should follow so that the δ-axis magnetic flux converges at zero.

**7.** The position-sensorless control circuit of one of claims 1 to 4,
wherein the controller comprises:

a specified voltage value calculator that produces, by using the motor current and an inferred rotor position, a specified voltage value that represents a voltage to be applied to the motor so that the motor current follows a value commensurate with a specified current value,

wherein the δ-axis magnetic flux inferrer infers the δ-axis magnetic flux based on a γ-axis component of the specified voltage value, the motor current, and an inferred motor speed, and
wherein the controller further comprises:

a position/speed inferrer having:

a calculator that receives the δ-axis magnetic flux and calculates the inferred motor speed so that the δ-axis magnetic flux converges at zero; and
an integrator that integrates the inferred motor speed and thereby calculates the inferred rotor position; and

a specified current value calculator that receives a specified motor speed value from outside and produces the specified current value so that the inferred motor speed follows the specified motor speed value.

8. A motor driving system comprising:

a position-sensorless control circuit of one of claims 1 to 7;
a motor that is controlled by the position-sensorless control circuit; and an inverter that drives the motor.

**Patentansprüche**

1. Steuerschaltung ohne Positionssensor zum Steuern eines Motors in der Weise, dass ein Achsenabweichungswinkel zwischen einer d-Achse und einer γ-Achse verringert wird, wobei die d-Achse eine Achse ist, die zu einem magnetischen Fluss parallel ist, der durch einen als Rotor verwendeten Permanentmagneten erzeugt wird, wobei die γ-Achse eine Achse ist, die zum Zweck einer Steuerung als der d-Achse entsprechend abgeleitet ist, und wobei eine δ-Achse eine Achse ist, die als der γ-Achse um 90 elektrische Grad voreilend abgeleitet ist,
wobei die Steuerschaltung ohne Positionssensor umfasst:

eine Ableitungseinrichtung für den magnetischen Fluss der δ-Achse, die aus den magnetischen Flüssen der δ-Achse und der γ-Achse, die Komponenten des magnetischen Flusses sind, der durch den Permanentmagneten parallel zu der δ-Achse bzw. zu der γ-Achse erzeugt wird, nur den magnetischen Fluss der δ-Achse anhand des durch die Ankerwicklung des Motors fließenden Motorstroms ableitet; und
eine Steuereinheit, die nur anhand des magnetischen Flusses der δ-Achse der magnetischen Flüsse der γ-Achse und der δ-Achse den Motor so steuert, dass der magnetische Fluss der δ-Achse gegen Null konvergiert, wodurch der Achsenabweichungswinkel verringert wird.

2. Steuerschaltung ohne Positionssensor nach Anspruch 1,
wobei die Ableitungseinrichtung für den magnetischen Fluss der δ-Achse den magnetischen Fluss der δ-Achse durch Ermitteln einer δ-Achsenkomponente einer Summe aus dem durch den Permanentmagneten erzeugten magnetischen Fluss und aus einem durch eine d-Achsenkomponente des Motorstroms erzeugten magnetischen Fluss ableitet.

3. Steuerschaltung ohne Positionssensor nach Anspruch 1,
wobei die Ableitungseinrichtung für den magnetischen Fluss der δ-Achse umfasst:

eine Ableitungseinrichtung für den magnetischen Fluss, die eine δ-Achsenkomponente einer Summe aus dem magnetischen Fluss, der durch den Permanentmagneten erzeugt wird, und aus einem magnetischen Fluss, der durch eine d-Achsenkomponente des Motorstroms erzeugt wird, ableitet; und
einen Magnetfluss-Kompensierer, der eine δ-Achsenkomponente, die durch die Ableitungseinrichtung für den magnetischen Fluss abgeleitet wird, in Übereinstimmung mit einer γ-Achsenkomponente des Motorstroms kompensiert und dadurch den magnetischen Fluss der δ-Achse berechnet.

4. Steuerschaltung ohne Positionssensor nach Anspruch 3,
wobei der Magnetfluss-Kompensierer einen Magnetfluss der δ-Achse durch Multiplizieren der δ-Achsenkomponente, die durch die Ableitungseinrichtung für den magnetischen Fluss abgeleitet wird, mit

$$\Phi_a / \left( \left( L_d - L_q \right) i_\gamma + \Phi_a \right)$$

berechnet, wobei ($\Phi_a$ eine Ankerflussverkettung repräsentiert, die dem Permanentmagneten zugeordnet werden kann, $L_d$ eine d-Achsen-Induktivität repräsentiert, $L_q$ eine q-Achsen-Induktivität repräsentiert und $i_\gamma$ die γ-Achsenkomponente des Motorstroms repräsentiert.

5. Steuerschaltung ohne Positionssensor nach einem der Ansprüche 1 bis 4, wobei die Steuereinheit umfasst:

eine Recheneinrichtung, die eine abgeleitete Motordrehzahl anhand des magnetischen Flusses der δ-Achse berechnet; und
eine Recheneinrichtung für einen bestimmten Stromwert, die einen bestimmten Stromwert erzeugt, dem der Motorstrom folgen sollte, damit die abgeleitete Motordrehzahl einem von außen gelieferten bestimmten Motordrehzahlwert folgt, und

wobei die Steuereinheit den Achsenabweichungswinkel durch Einstellen der abgeleiteten Motordrehzahl verringert, so dass der magnetische Fluss der δ-Achse gegen Null konvergiert.

6. Steuerschaltung ohne Positionssensor nach einem der Ansprüche 1 bis 4,
wobei die Steuereinheit den Achsenabweichungswinkel durch Einstellen eines bestimmten Drehmomentwerts, dem ein Drehmoment des Motors folgen sollte, verringert, so dass der magnetische Fluss der δ-Achse gegen Null konvergiert.

7. Steuerschaltung ohne Positionssensor nach einem der Ansprüche 1 bis 4, wobei die Steuereinheit umfasst:

eine Recheneinrichtung für einen bestimmten Spannungswert, die unter Verwendung des Motorstroms und einer abgeleiteten Rotorposition einen bestimmten Spannungswert erzeugt, der eine Spannung repräsentiert, die an den Motor angelegt werden soll, damit der Motorstrom einem Wert folgt, der einem bestimmten Stromwert entspricht,

wobei die Ableitungseinrichtung für den magnetischen Fluss der δ-Achse den magnetischen Fluss der δ-Achse anhand einer γ-Achsenkomponente des bestimmten Spannungswerts, des Stromwerts und einer abgeleiteten Motordrehzahl ableitet und
wobei die Steuereinheit ferner umfasst:

eine Positions/Geschwindigkeits-Ableitungseinrichtung mit:

einer Recheneinrichtung, die den magnetischen Fluss der δ-Achse empfängt und die abgeleitete Motordrehzahl berechnet, so dass der magnetische Fluss der δ-Achse gegen Null konvergiert; und
einem Integrator, der die abgeleitete Motordrehzahl integriert und dadurch die abgeleitete Motorposition berechnet; und

eine Recheneinrichtung für einen bestimmten Stromwert, die einen bestimmten Motordrehzahlwert von außen empfängt und einen bestimmten Stromwert erzeugt, so dass die abgeleitete Motordrehzahl dem bestimmten Motordrehzahlwert folgt.

8. Motoransteuerungssystem, das umfasst:

eine Steuerschaltung ohne Positionssensor nach einem der Ansprüche 1 bis 7;
einen Motor, der durch die Steuerschaltung ohne Positionssensor gesteuert wird; und
einen Umrichter, der den Motor ansteuert.

**Revendications**

1. Circuit de commande de position sans capteur pour commander un moteur de sorte à réduire un angle de déviation d'axe entre un axe d et un axe γ, l'axe d étant un axe parallèle à un flux magnétique produit par un aimant permanent utilisé comme rotor, l'axe γ étant un axe déduit à des fins de commande comme correspondant à l'axe d, un axe δ étant un axe déduit comme étant de 90 degrés électriques devant l'axe γ,
dans lequel le circuit de commande de position sans capteur comprend :

un dispositif de déduction de flux magnétique d'axe δ qui déduit, parmi les flux magnétiques d'axe δ et d'axe γ, les composants du flux magnétique produits par l'aimant permanent parallèle à l'axe δ et à l'axe γ respectivement, uniquement le flux magnétique d'axe δ en se basant sur le courant de moteur circulant à travers un enroulement d'induit du moteur ; et

un dispositif de commande qui commande le moteur de sorte que le flux magnétique d'axe δ converge à zéro en se basant uniquement sur le flux magnétique d'axe δ des flux magnétiques d'axe γ et d'axe δ, réduisant ainsi l'angle de déviation d'axe.

2. Circuit de commande de position sans capteur selon la revendication 1,
dans lequel le dispositif de déduction de flux magnétique d'axe δ déduit le flux magnétique d'axe δ en trouvant un composant d'axe δ d'une somme du flux magnétique produit par l'aimant permanent et d'un flux magnétique produit par un composant d'axe d du courant de moteur.

3. Circuit de commande de position sans capteur selon la revendication 1,
dans lequel le dispositif de déduction de flux magnétique d'axe δ comprend :

un dispositif de déduction de flux magnétique qui déduit un composant d'axe δ d'une somme du flux magnétique produit par l'aimant permanent et d'un flux magnétique produit par un composant d'axe d du courant de moteur ; et
un compensateur de flux magnétique qui compense le composant d'axe δ déduit par le dispositif de déduction de flux magnétique selon un composant d'axe γ du courant de moteur et calcule ainsi le flux magnétique d'axe δ.

4. Circuit de commande de position sans capteur selon la revendication 3,
dans lequel le compensateur de flux magnétique calcule le flux magnétique d'axe δ en multipliant le composant d'axe δ déduit par le dispositif de déduction de flux magnétique par

$$\Phi_a/((L_d - L_q)i_\gamma + \Phi_a),$$

où ($\Phi_a$ représente une liaison de flux d'induit pouvant être attribuée à l'aimant permanent, $L_d$ représente une inductance d'axe d, $L_q$ représente une inductance d'axe q et i$\gamma$ représente le composant d'axe γ du courant de moteur.

5. Circuit de commande de position sans capteur selon l'une des revendications 1 à 4,
dans lequel le dispositif de commande comprend :

un calculateur qui calcule une vitesse de moteur déduite en se basant sur le flux magnétique d'axe δ ; et
un calculateur de valeur de courant spécifiée qui produit une valeur de courant spécifiée que le courant de moteur doit suivre de sorte que la vitesse de moteur déduite suit une valeur de vitesse de moteur spécifiée délivrée depuis l'extérieur, et

dans lequel le dispositif de commande réduit l'angle de déviation d'axe en ajustant la vitesse de moteur déduite de sorte que le flux magnétique d'axe δ converge à zéro.

6. Circuit de commande de position sans capteur selon l'une des revendications 1 à 4,
dans lequel le dispositif de commande réduit l'angle de déviation d'axe en ajustant une valeur de couple spécifiée qu'un couple du moteur doit suivre de sorte que le flux magnétique d'axe δ converge à zéro.

7. Circuit de commande de position sans capteur selon l'une des revendications 1 à 4,
dans lequel le dispositif de commande comprend :

un calculateur de valeur de tension spécifiée qui produit, en utilisant le courant de moteur et une position de rotor déduite, une valeur de tension spécifiée qui représente une tension appliquée au moteur de sorte que le courant de moteur suit une valeur proportionnée à une valeur de courant spécifiée,

dans lequel le dispositif de déduction de flux magnétique d'axe δ déduit le flux magnétique d'axe δ en se basant sur un composant d'axe γ de la valeur de tension spécifiée, le courant de moteur et une vitesse de moteur déduite, et
dans lequel le dispositif de commande comprend en outre :

un dispositif de déduction de position/vitesse ayant :

un calculateur qui reçoit le flux magnétique d'axe δ et qui calcule la vitesse de moteur déduite de sorte que le flux magnétique d'axe δ converge à zéro ; et
un intégrateur qui intègre la vitesse de moteur déduite et qui calcule ainsi la position de rotor déduite ; et

un calculateur de valeur de courant spécifiée qui reçoit une valeur de vitesse de moteur spécifiée depuis l'extérieur et qui produit la valeur de courant spécifiée de sorte que la vitesse de moteur déduite suit la valeur de vitesse de moteur spécifiée.

**8.** Système d'entraînement de moteur comprenant :

un circuit de commande de position sans capteur selon l'une des revendications 1 à 7 ;
un moteur qui est commandé par le circuit de commande de position sans capteur ; et
un inverseur qui entraîne le moteur.

# FIG.1

# FIG.2

# FIG.3

# FIG.4

EP 1 630 949 B1

# FIG.5

# FIG.6

# FIG.7

# FIG.8

# FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3411878 B

- JP 2003259679 A